# EUROPEAN PATENT SPECIFICATION

(11) **EP 2 190 000 B1**
(45) Date of publication and mention of the grant of the patent: **25.05.2011**
(21) Application number: 09014508.7
(22) Date of filing: 20.11.2009
(51) Int. Cl.: H01J 9/20, H01J 61/34, H01J 61/35, C03C 17/04

(54) **Coating liquid for diffusing film of high-pressure discharge lamp and high-pressure discharge lamp**
Suspension für die Herstellung einer Diffussionsbeschichtung einer Hochdruckentladungslampe und Hochdruckentladungslampe
Revêtement liquide pour la diffusion d'un film de lampe à décharge haute pression et lampe à décharge haute pression

(30) Priority: 21.11.2008 JP 2008298714
(43) Date of publication of application: 26.05.2010
(73) Proprietor: Toshiba Lighting & Technology Corporation, Yokosuka-shi Kanagawa 237-8510 (JP)
(72) Inventor: Watanabe, Miho, Yokosuka-shi Kanagawa 237-8510, (JP); Sakaguchi, Sadao, Yokosuka-shi Kanagawa 237-8510, (JP); Okamura, Kazuyoshi, Yokosuka-shi Kanagawa 237-8510, (JP); Kanda, Akihiro, Yokosuka-shi Kanagawa 237-8510, (JP); Kikuta, Ryo, Tokyo (JP); Fujita, Yasuhito, Tokyo (JP)
(74) Representative: Kramer - Barske - Schmidtchen

(56) References cited:
- EP-A- 1 447 433
- JP-A- 7 320 687
- JP-A- 2007 156 391
- JP-A- 2008 243 371
- US-A1- 2008 145 641

## Description

The present invention relates to a coating liquid for a diffusing film that diffuses light emitted from a luminous tube of a high-pressure discharge lamp and a high-pressure discharge lamp provided with the diffusing film.

Many high-pressure discharge lamps are currently used in the fields of outdoor illumination and have been increasingly used in the fields of indoor illumination for stores and the like in recent years. As high-pressure discharge lamps in indoor illumination fields, those having high efficiency and high color rendering properties are primarily used.

Generally, the surface of the outer bulb of such a high-pressure lamp is subjected to frost processing with hydrofluoric acid to diffuse the light emitted from a luminous tube for preventing glare. Also, other diffusing methods are known. For example, there is known a method of roughening the surface by sandblast or chemical etching, or a method comprising steps of applying a coating solution obtained by adding a hydrophobic plasticizer to an organic metal compound solution to the surface of the glass tube and drying and then baking to make a rough-surfaced filter, thereby obtaining a diffusing surface (Jpn. Pat. Appln. KOKAI Publication No. 2001-342037). Moreover, a metal halide lamp made to have a diffusing effect by applying SiO₂ microparticles to the outer surface of the outer bulb is also known (Jpn. Pat. Appln. KOKAI Publication No. 7-320687).

Microparticles are generally disclosed in US 2008/0145 641 A1.

An exemplary application for microparticles in a transparent substrate is disclosed in JP 2007/156391 A.

However, the method such as the sandblast that mechanically abrades the surface of the glass tube for frost processing has a problem of reducing original strength of the glass tube. Also, since the frost processing by chemical treatment uses hydrofluoric acid, this method is inadequate taking environmental problem of waste water into account. Moreover, when these methods are used for providing diffusing properties, there is brought about a problem of reducing light flux and thus reducing efficiency.

The present invention has been made in view of the above problems, and it is an object of the invention to provide a coating liquid for a diffusing film of a high-pressure discharge lamp that properly diffuses light emitted from a luminous tube and also suppresses reduction in light flux and efficiency and to provide a high-pressure discharge lamp comprising the diffusing film.

The object is achieved by the subject-matter of the independent claims.

Further developments of the invention are given in the dependent claims.

The "first particles" are made of shall fragments produced by fracturing hollow silica particles.

The term "hollow second silica particles" means that, for example, the second silica particles have a spherical outer shape and an inner cavity forming a hollow portion.

Since the second silica particles have a hollow shape, they act to raise total light transmittance of the diffusing film without impairing light diffusing characteristics.

The second silica particles preferably have a spherical outer shape having an average particle size of 2 to 10 µm. The second silica particles more preferably have an average particle size of 2 to 5 µm. When the average particle size of the second silica particles is less than 2 µm, diffusion by the diffusing film is weakened, bringing about a rise in linear transmittance, whereas when the average particle size exceeds 10 µm, the total light transmittance is lowered.

The percentage by volume of the hollow portion of the hollow second silica particles is preferably 30 to 70% by volume. When the percentage by volume of the hollow portion of the hollow second silica particles is less than 30% by volume, diffusion by the diffusing film is weakened, bringing about a rise in linear transmittance. When the percentage by volume of the hollow portion of the hollow second silica particles exceeds 70% by volume, the second silica particles cannot have strength required to hold the hollow portion in a process of preparing coating liquid, and thus, the diffusing film comprising the second silica particles cannot be formed.

Also, the second silica particles are preferably partially provided with projection parts which project from the inner surface or outer surface in order to further enhance diffusion.

The term "first silica particles having shapes different in surface curvature from each other" means that a shell fragment constituting a first silica particle has different surface curvatures on the inner and outer surfaces, or shell fragments constituting first silica particles have different surface curvatures on their outer surfaces.

The first silica particles are specifically produced in the following manner. For example, hollow silica particles having an average particle size of 3 µm and having 60% by volume of hollow portion are fractured by a mill such as a pin mill, jet mill and blade. When the volume occupied by hollow silica particles before fracturing is defined as 100% by volume, the silica particles are fractured such that the volume occupied by the first silica particles to be produced is 5 to 80% by volume on average. The hollow silica particles are fractured at random by this treatment and are made into first silica particles made of shell fragments of the hollow silica particles and have shapes different in surface curvature from each other. Such first silica particles having shapes different in surface curvature from each other have superior light diffusing characteristics to hollow silica particles having a spherical shape. Then, the first silica particles are classified as needed, and the obtained silica particles are dispersed in water containing a dispersant with a bead mill to obtain a dispersed product of the first silica particles having shapes different in surface curvature from each other.

The reason why hollow silica particles are fractured such that the volume occupied by the fractured particles is designed to be 5 to 80% by volume on average to obtain the first silica particles is as follows. When hollow silica particles are fractured until the volume occupied by the fractured particles becomes less than 5% by volume, clearances between second silica particles are filled with the produced first silica particles, and thus, diffusion by the diffusing film is weakened. When the volume of particles after the hollow silica particles are fractured exceeds 80% by volume, the produced first silica particles are not so different from the non-fractured hollow silica particles, and thus, diffusion by the diffusing film is weakened.

The average particle size of the hollow silica particles used as the raw material of the first silica particles is preferably 2 to 5 µm. When first silica particles produced from hollow silica particles having an average particle size of less than 2 µm are used, diffusion by the diffusing film is weakened and a haze value (Hz) is lowered. When first silica particles produced from hollow silica particles having an average particle size exceeding 5 µm are used, the total light transmittance of the diffusing film is lowered.

The percentage by volume of the hollow portion of the hollow silica particles used as the raw material of the first silica particles is preferably 30 to 70% by volume like that of the aforementioned second silica particles.

In the high-pressure discharge lamp of the present invention, the mixing ratio by weight of the second silica particles to the first silica particles in the diffusing film is 1/5 to 10/1. When the mixing ratio is less than 1/5, the total light transmittance of the diffusing film is lowered. When the mixing ratio exceeds 10/1, diffusion by the diffusing film is weakened and the haze value is lowered.

In the high-pressure discharge lamp of the present invention, the diffusing film preferably has characteristics of a linear transmittance of 5 to 50% in a wavelength range of 300 to 800 nm and a linear transmittance of 30% or less at a wavelength of 550 nm and has a total light transmittance of 90% or more. Here, the total light transmittance is measured using an integrating sphere using BaSO₄ where the total light transmittance of the substrate glass is defined as 100%. Also, the linear light transmittance is measured on the premise that the linear light transmittance of the substrate glass is defined as 100%.

The diffusing film has preferably a total light transmittance of 85% or more and a haze value of 50% or more, and more preferably a total light transmittance of 90% or more and a haze value of 80% or more.

In the high-pressure discharge lamp of the present invention, the diffusing film preferably has a thickness of 2 to 20 µm. When the thickness of the diffusing film is less than 2 µm, this brings about weak diffusion and a low haze value. When the thickness exceeds 20 µm, the total light transmittance is lowered.

The coating liquid for a diffusing film of a high-pressure discharge lamp according to the present invention may be produced, for example, by blending the first silica particles and the second silica particles with a silicate polymer obtained by hydrolyzing ethyl silicate, followed by subjecting to dehydration condensation. The diffusing film may be formed by applying the coating liquid to at least one surface of the outer bulb of the high-pressure discharge lamp and drying the coating film, followed by subjecting to heat treatment. The silicate polymer used as the binder is almost converted into silica by the heat treatment.

The amount of the binder made of the silicate polymer in the coating liquid is preferably 3 to 20% by weight. When the amount of the binder is less than 3% by weight, the strength of the diffusing film is reduced and therefore, the film tends to be peeled off. When the amount of the binder exceeds 20% by weight, the binder filled in the clearances between silica particles is increased, bringing about low diffusion and a reduction in total light transmittance.

Using the coating liquid for a diffusing film of a high-pressure discharge lamp according to the present invention, a diffusing film containing the first silica particles having shapes different in surface curvature from each other and the hollow second silica particles is formed, enabling the production of a diffusing film which satisfactorily diffuses the light emitted from a luminous tube, limits a reduction in diffusion transmittance to suppress a reduction in efficiency and is also improved in light distribution characteristics.

Also, since the silicate polymer is added to the coating liquid as the binder, a high-pressure discharge lamp diffusing film less degraded and having sufficient strength can be formed.

The invention can be more fully understood from the following detailed description when taken in conjunction with the accompanying drawings, in which:
FIG. 1 is a cross-sectional view of a high-pressure discharge lamp according to a first embodiment of the present invention;
FIG. 2 is a cross-sectional view of a high-pressure discharge lamp according to a second embodiment of the present invention;
FIGS. 3A and 3B are secondary electron photographic images of the surface and section of the diffusing film formed on the high-pressure discharge lamp of FIG. 2; and
FIG. 4 is a diagram showing a light distribution curve of the high-pressure discharge lamp of FIG. 2.

Embodiments of the invention will be described with reference to the drawings.

### (First embodiment)

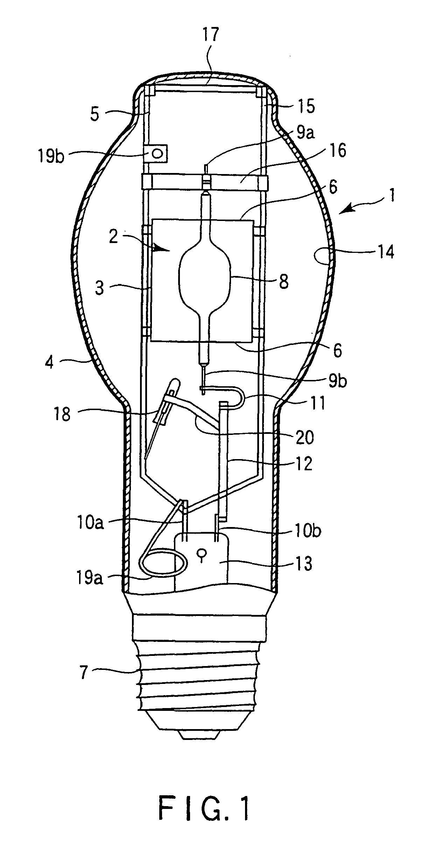

FIG. 1 is a schematic cross-sectional view of a high-pressure discharge lamp according to a first embodiment of the present invention. A metal halide lamp 1 as the high-pressure discharge lamp comprises a luminous tube 2, a glass cylinder 3 enclosing the luminous tube 2, a reinforcing member (not shown) made of alumina fiber strings wound around the outer periphery of the glass cylinder 3, an outer bulb 4 housing the luminous tube 2 and the glass tube 3, a support member 5, a metal plate member 6 and a feeder unit 7.

The luminous tube 2 comprises a translucent ceramics sealed container 8, a pair of electrodes (not shown), a pair of current introduction conductors 9a and 9b and a discharge medium sealed in the sealed container 8. The current introduction conductor 9a disposed on the upper side of the luminous tube 2 is supported by the support member 5 and connected to an internal lead 10a through the support member 5. Also, the current introduction conductor 9b disposed on the lower side of the luminous tube 2 is connected to connecting conductors 11 and 12 and also connected to an internal lead 10b through the connecting conductors 11 and 12. The outer bulb 4 is provided with a flare stem 13 at the neck part positioned at the lower part thereof. A diffusing film 14 having a thickness of 4 µm and comprising first silica particles having shapes different in surface curvature from each other and hollow second silica particles is formed on the inner surface of the outer bulb 4.

The diffusing film 14 is formed in the following manner. Hollow silica particles having an average particle size of 3 µm and having 60% by volume of hollow portion inside thereof, for example, are fractured such that the produced particles have an average volume of 5 to 80 vol% with a mill such as a pin mill to provide first silica particles having random curvatures which are aggregates of fine shell fragments. The first silica particles have a non-spherical shape and have a nearly flat shape since they are made of shell fragments and are therefore superior in light diffusing characteristics. Next, the first silica particles are dispersed in water containing dispersant with a bead mill and classified as needed to produce a dispersed product of the first silica particles having random curvatures. Subsequently, hollow second silica particles having an average particle size of 3 µm and containing 60% by volume of hollow portion inside thereof, for example, are prepared. Because the second silica particles have a hollow shape, they act to raise the diffusion transmittance without impairing the light diffusing characteristics. Then, the first and second silica particles are mixed with a silicate polymer obtained by hydrolyzing ethyl silicate followed by subjecting to dehydration condensation, to prepare a coating liquid. Further, the liquid is applied to the inner surface of the outer bulb 4 by flow coating, dried and then heat-treated at about 500°C to form the diffusing film 14. At this time, it is preferable to form the diffusing film 14 such that the second silica particles are exposed and, in some cases, projected from the surface of the film.

The support member 5 comprises a support frame 15 and a band conductor 16. The support frame 15 is provided with a falling object-receiving plate 17. The support frame 15 is made of a stainless steel rod and shaped by bending a part of the rod with its bended portion being connected to the internal lead 10a. The band conductor 16 is welded to the support frame 15 bridge-wise and the current introduction conductor 9a disposed on the upper side (in the drawing) of the luminous tube 2 is welded to the band conductor 16 to arrange the luminous tube 2 at a predetermined position. Reference numeral 18 in the drawing represents a UV enhancer, reference numerals 19a and 19b represent getters, and reference numeral 20 represents a conductor that connects the external electrode of the metal halide lamp 1 with the connecting conductor 12.

The metal halide lamp of the first embodiment has a structure in which the diffusing film 14, comprising the first silica particles having shapes different in surface curvature from each other and the hollow second silica particles, is formed on the inner surface of the outer bulb 4. Therefore, the metal halide lamp properly diffuses the light emitted from the luminous tube 2 and also, suppresses a reduction in light flux to thereby limit a reduction in efficiency, making it possible to improve the light distribution characteristics.

### (Second embodiment)

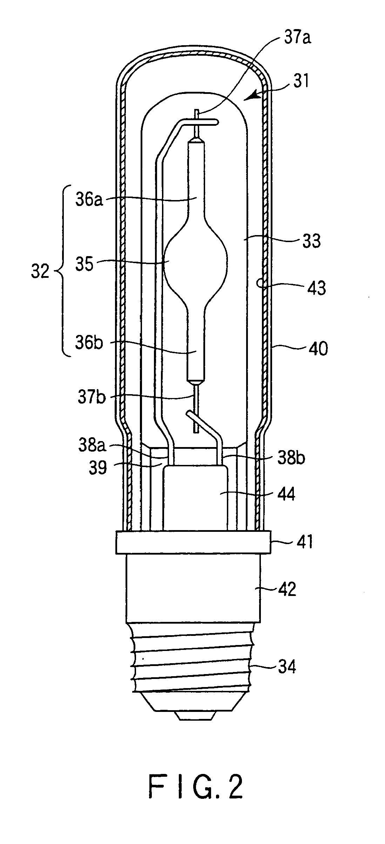

FIG. 2 is a schematic cross-sectional view showing a high-pressure discharge lamp according to a second embodiment of the present invention.

Reference numeral 31 in the drawing represents a 150-W metal halide lamp as the high-pressure discharge lamp and comprises a ceramics luminous tube 32. An inner bulb 33 is disposed around the luminous tube 32 as a transparent protective tube that protects the luminous tube 32. An E-type cap 34 as a feeder unit which conducts with the luminous tube 32 is attached to the inner bulb 33.

The luminous tube 32 comprises a luminous part 35 and narrow tubes 36a and 36b extending in directions opposite to each other along the axis of the luminous part 35. The luminous part 35 is air-tightly sealed and has a discharge space formed inside thereof. In the discharge space, a pair of electrodes (no shown) inserted from the narrow parts 36a and 36b are disposed opposite to each other. Feeder bodies 37a and 37b each joined with an electrode at its end are disposed and sealed by a glass frit or the like in the narrow tubes 36a and 36b. A discharge medium made of, for example, a metal halide or rare gas (mercury is added as needed) is sealed in the luminous tube 32. Power feeder lines 38a and 38b are electrically connected to the feeder bodies 37a and 37b. A pinch seal 39 that seals the power feeder lines 38a and 38b is formed on the case side of the inner bulb 33.

The inner bulb 33 is enclosed by a transparent cylindrical outer bulb (cover bulb) 40 with an opened lower end. The lower end of the outer bulb 40 is fixed to a ceramic holder 42 by an outer bulb caulking metal ring 41. A diffusing film 43, comprising first silica particles different in curvature from each other and hollow second silica particles, is formed on the inner surface of the outer bulb 40. The diffusing film 43 is formed in the following manner. Specifically, a coating liquid in which the first silica particles different in curvature from each other and hollow second silica particles having an average particle size of 3 µm are dispersed is applied to the inner surface of the outer bulb, dried and then baked under heating at about 500°C to form a white and opaque hard film.

The formed diffusing film 43 has a thickness of 3 µm at the center in the direction of the tube axis of the outer bulb 40 and has characteristics that the linear transmittance at a wavelength of 300 to 800 nm is 5% to 50% or less, the linear transmittance at a wavelength of 550 nm is 30% or less and the diffusion transmittance is 90% or more. The linear transmittance is measured using an integrating sphere type measuring device using BaSO₄ as the standard sample.

Reference numeral 44 in the drawing is a protective tube support that supports the pinch seal part 39 of the inner bulb 33 and is integrated with the ceramic holder 42.

The metal halide lamp of the second embodiment has a structure in which the diffusing film 43, comprising the first silica particles different in surface curvature from each other and the hollow second silica particles, is formed on the inner surface of the outer bulb 40. Therefore, the metal halide lamp suppresses a reduction in light flux of emission from the luminous tube 32 to thereby limit a reduction in efficiency, making it possible to improve the light distribution characteristics.

### (Third embodiment)

A coating liquid to be used for a diffusing film of a high-pressure discharge lamp according to a third embodiment contains first silica particles having shapes different in surface curvature from each other, hollow second silica particles and a silicate polymer. The liquid is prepared by blending the first silica particles and second silica particles with a silicate polymer obtained by hydrolyzing ethyl silicate followed by subjecting to dehydration condensation. The diffusing film is formed by applying the liquid to the inner surface of outer bulb (inner surface of the lamp), drying the coating film and heat-treating at 500°C.

Since the coating liquid of the third embodiment comprises a silicate polymer superior in heat resistance, even if the diffusing film is formed on the inner surface of the outer bulb of the high-pressure discharge lamp heated to a high temperature during lighting, the diffusing film suffers less thermal degradation, is resistant to cracking and is free from problems such as film peeling, keeping sufficient strength.

### (Examples 1 to 16 and Comparative Examples 1 to 15)

Examples 1 to 16 and Comparative Examples 1 to 15 are shown in Tables 1 and 2 below. With regard to these Examples and Comparative Examples, Table 1 shows the particle size D (µm) of the hollow second silica particles and the volume percentage Vh (vol%) of their hollow portion, the particle size D (µm) of the hollow silica particles which are the raw material of the first silica particles and the volume percentage Vh (vol%) of their hollow portion, the volume ratio (vol%) occupied by the fractured first silica particles, the amount of the first and second silica particles Wp (wt%) mixed in the liquid and the ratio by weight S2/S1 of the second silica particles to the first silica particles. With regard to these Examples and Comparative Examples, Table 2 shows the amount of the silicate polymer Wb (wt%) mixed in the liquid as a binder, the thickness t (µm) of the diffusing film, the total light transmittance (Tt) and haze value (Hz). The haze value was measured using a haze meter (trade name: NDH-2000, manufactured by Nippon Denshoku Industries Co., Ltd.) after a coating liquid to be a diffusing film was applied to a slide glass by flow coating. The haze value is a value measured in a circumstance containing 0% of atmosphere where the diffusing film is separated from the glass substrate. The total light transmittance (Tt) was measured by forming a diffusing film on a glass substrate having the same optical characteristics as the outer bulb used in the above Examples where the total light transmittance of the glass substrate was defined as 100%. The transmittance was measured using an integrating sphere type measuring device using BaSO₄ as the standard sample.

**Table 1**

| | 2nd silica particles | | 1st silica particles | | | Amount of particles | Weight ratio |
|---|---|---|---|---|---|---|---|
| | D (µm) | Vh (vol%) | D (µm) | Vh (vol%) | Vr (vol%) | Wp(wt%) | S₁/S₂ |
| Ex. 1 | 3 | 50 | 3 | 50 | 30 | 10 | 5/1 |
| Ex. 2 | 2 | 50 | 3 | 50 | 30 | 10 | 5/1 |
| Ex. 3 | 5 | 50 | 3 | 50 | 30 | 10 | 5/1 |
| Ex. 4 | 3 | 30 | 3 | 50 | 30 | 10 | 5/1 |
| Ex. 5 | 3 | 50 | 2 | 50 | 30 | 10 | 5/1 |
| Ex. 6 | 3 | 50 | 5 | 50 | 30 | 10 | 5/1 |
| Ex. 7 | 3 | 50 | 3 | 30 | 30 | 10 | 5/1 |
| Ex. 8 | 3 | 50 | 3 | 50 | 10 | 10 | 5/1 |
| Ex. 9 | 3 | 50 | 3 | 50 | 70 | 10 | 5/1 |
| Ex.10 | 3 | 50 | 3 | 50 | 30 | 3 | 5/1 |
| Ex.11 | 3 | 50 | 3 | 50 | 30 | 20 | 5/1 |
| Ex.12 | 3 | 50 | 3 | 50 | 30 | 10 | 1/5 |
| Ex.13 | 3 | 50 | 3 | 50 | 30 | 10 | 10/1 |
| Ex.14 | 3 | 50 | 3 | 50 | 30 | 10 | 5/1 |
| Ex.15 | 3 | 50 | 3 | 50 | 30 | 10 | 5/1 |
| Ex.16 | 3 | 50 | 3 | 50 | 30 | 10 | 5/1 |
| Comp. 1 | 1 | 50 | 3 | 50 | 30 | 10 | 5/1 |
| Comp. 2 | 8 | 50 | 3 | 50 | 30 | 10 | 5/1 |
| Comp. 3 | 3 | 25 | 3 | 50 | 30 | 10 | 5/1 |
| Comp. 4 | 3 | 50 | 1 | 50 | 30 | 10 | 5/1 |
| Comp. 5 | 3 | 50 | 8 | 50 | 30 | 10 | 5/1 |
| Comp. 6 | 3 | 50 | 3 | 25 | 30 | 10 | 5/1 |
| Comp. 7 | 3 | 50 | 3 | 50 | 3 | 10 | 5/1 |
| Comp. 8 | 3 | 50 | 3 | 50 | 90 | 10 | 5/1 |
| Comp. 9 | 3 | 50 | 3 | 50 | 30 | 2 | 5/1 |
| Comp.10 | 3 | 50 | 3 | 50 | 30 | 25 | 5/1 |
| Comp.11 | 3 | 50 | 3 | 50 | 30 | 10 | 1/10 |
| Comp.12 | 3 | 50 | 3 | 50 | 30 | 10 | 15/1 |
| Comp.13 | 3 | 50 | 3 | 50 | 30 | 10 | 5/1 |
| Comp.14 | 3 | 50 | 3 | 50 | 30 | 10 | 5/1 |
| Comp.15 | 3 | 50 | 3 | 50 | 30 | 10 | 5/1 |

**Table 2**

| | Amount of binder | Thickness of diffusing film | Tt | Hz |
|---|---|---|---|---|
| | Wb(wt%) | t(µm) | (%) | (%) |
| Ex. 1 | 10 | 6 | 95 | 98 |
| Ex. 2 | 10 | 6 | 94 | 76 |
| Ex. 3 | 10 | 6 | 89 | 92 |
| Ex. 4 | 10 | 6 | 93 | 71 |
| Ex. 5 | 10 | 6 | 92 | 79 |
| Ex. 6 | 10 | 6 | 91 | 90 |
| Ex. 7 | 10 | 6 | 92 | 78 |
| Ex. 8 | 10 | 6 | 92 | 63 |
| Ex. 9 | 10 | 6 | 92 | 51 |
| Ex.10 | 10 | 6 | 95 | 58 |
| Ex.11 | 10 | 6 | 86 | 91 |
| Ex.12 | 10 | 6 | 85 | 92 |
| Ex.13 | 10 | 6 | 93 | 53 |
| Ex.14 | 20 | 6 | 89 | 61 |
| Ex.15 | 10 | 2 | 95 | 57 |
| Ex.16 | 10 | 20 | 85 | 98 |
| Comp. 1 | 10 | 6 | 90 | 48 |
| Comp. 2 | 10 | 6 | 79 | 85 |
| Comp. 3 | 10 | 6 | 87 | 47 |
| Comp. 4 | 10 | 6 | 87 | 44 |
| Comp. 5 | 10 | 6 | 81 | 89 |
| Comp. 6 | 10 | 6 | 86 | 45 |
| Comp. 7 | 10 | 6 | 88 | 37 |
| Comp. 8 | 10 | 6 | 89 | 28 |
| Comp. 9 | 10 | 6 | 95 | 32 |
| Comp.10 | 10 | 6 | 77 | 87 |
| Comp.11 | 10 | 6 | 79 | 89 |
| Comp.12 | 10 | 6 | 90 | 31 |
| Comp.13 | 25 | 6 | 86 | 43 |
| Comp.14 | 10 | 1 | 95 | 32 |
| Comp. 15 | 10 | 25 | 76 | 98 |

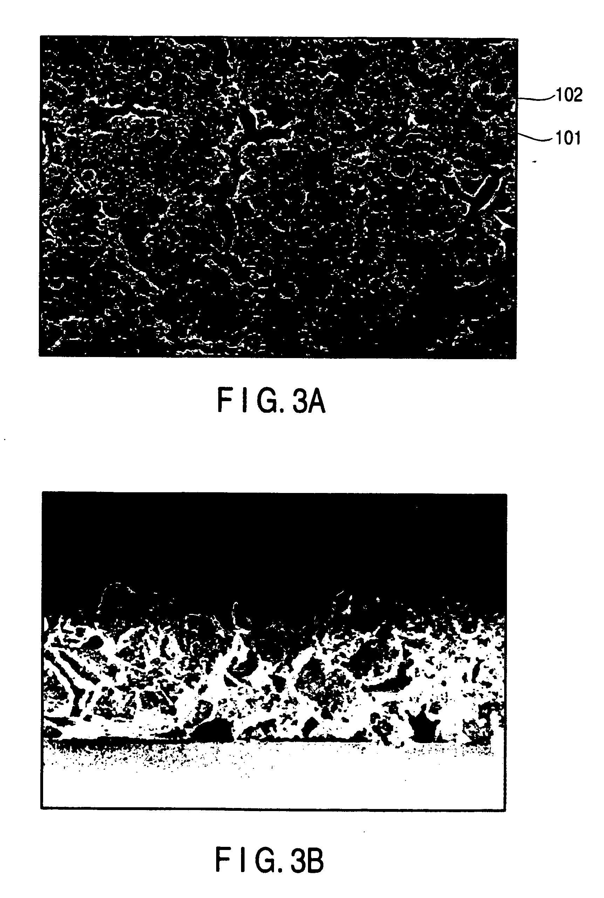

FIGS. 3A and 3B are secondary electron photographic images of the surface and section of a diffusing film used in the metal halide lamp of FIG. 2 as the high-pressure discharge lamp. It was found from

FIG. 3 that the hollow second silica particles 102 are dispersed in the first silica particles 101 and projected from the inner surface. In FIG. 3, although cracks are produced on the diffusing film by drying aggregation, these cracks have no influence on the performance of the diffusing film. Specifically, even in the case where there are cracks, problems such as film peeling or the like do not arise until the end of film life and the film can keep sufficient strength where the silicate polymer is added to the coating liquid.

Also, the almost spherical second silica particles have a hollow portion, and the hollow portion is different from the shell in refractive index. For this reason, the visible light incident on the particles is refracted by the shell and further by the inside hollow portion to thereby obtain diffusing characteristics. For the same reason, the second silica particles have a hollow portion in the diffusing film and therefore, they have a higher diffusion transmittance than silica particles having no hollow portion. Thus, in the metal halide lamp in which the diffusing film is formed, reduction in initial light flux can be prevented. Moreover, the first silica particles and the second silica particles are made of the same metal oxides and therefore have the same refractive index, making it possible to reduce the optical loss caused by light interference and difference in refractive index.

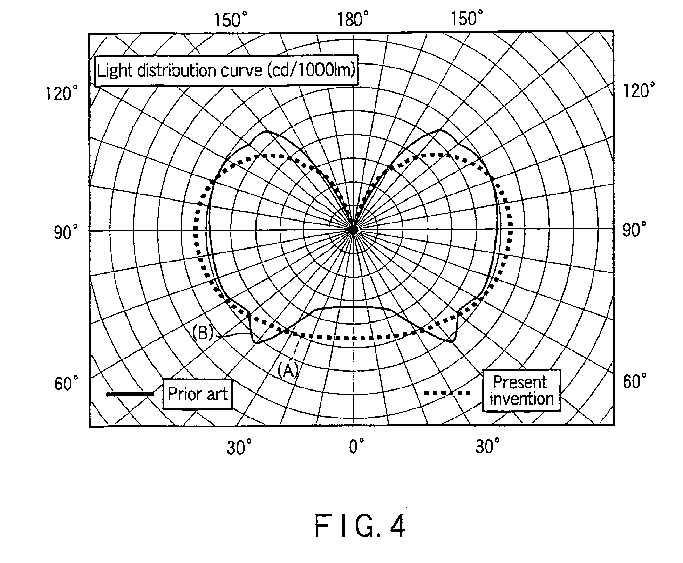

FIG. 4 is a characteristic diagram showing the light distribution of the metal halide lamp shown in FIG. 2 when the lamp is turned on at a vertical position where the cap is set upward. In FIG. 4, the symbol A (dotted line) shows the light distribution characteristics of the metal halide lamp (present invention) in which the diffusing film is formed on the inner surface of the outer bulb, and the symbol B (solid line) shows the light distribution characteristics of the conventional metal halide lamp in which no diffusing film is formed. FIG. 4 shows that, since the diffusing film is formed on the inner surface of the outer bulb in the metal halide lamp of the present invention, the light emitted from the luminous tube is diffused and therefore, smooth and uniform light distribution characteristics are obtained.

The relative initial light flux of the metal halide lamp when the lamp was turned on at a vertical position where the cap is set upward was measured. Where the initial light flux of a lamp in which no diffusing film was formed on the inner surface of the outer bulb was defined as 100%, the initial light fluxes of the lamps in which a diffusing film was formed in a thickness of 2.5 µm, 3.5 µm and 5.8 µm on the inner surface of the outer bulb were 99.0%, 98.3% and 98.1%, respectively. It was confirmed from this test that the initial light flux of the lamp provided with the diffusing film formed on the inner surface of the outer bulb was reduced by less than 2% compared to the initial light flux of the lamp provided with no diffusing film and therefore, a reduction in efficiency could be prevented.

The present invention is not limited to the above embodiments and the constituting elements of these embodiments may be modified in practical stages within the scope of the present invention as claimed. Specifically, in the above embodiments, the diffusing film is formed on the inner surface of the outer bulb (cover bulb). However, the diffusing film may be formed on the outer surface or on each of the inner and outer surfaces. Also, the thickness of the diffusing film is not limited to the above range as long as the efficiency and light distribution characteristics are satisfactorily kept.

## Claims

1. A high-pressure discharge lamp comprising:
a luminous tube (2, 32);
an outer bulb (4, 40) housing the luminous tube (2, 32); and
a diffusing film (14, 43) formed on at least one of inner and outer surfaces of the outer bulb (4, 40),
**characterized in that**
the diffusing film (14, 43) comprises first silica particles made of shell fragments produced by fracturing hollow silica particles and hollow second silica particles, wherein a weight ratio of the second silica particles and the first silica particles is in a range of 1/5 to 10/1.

2. The high-pressure discharge lamp according to claim 1, further comprising
an inner bulb (33) disposed between the luminous tube (32) and the outer bulb (40) to enclose the luminous tube (32), the inner bulb (33) being sealed vacuum-tightly.

3. The high-pressure discharge lamp according to claim 1 or 2, wherein the second silica particles have a spherical shape having an average particle size of 2 to 10 µm.

4. The high-pressure discharge lamp according to any one of claims 1 to 3, wherein the diffusing film (14, 43) has a linear transmittance of 5 to 50 % in a wavelength range of 300 to 800 nm and a linear tranmittance of 30 % or less at a wavelength of 550 nm and has a total light transmittance of 90 % or more.

5. The high-pressure discharge lamp according to any one of claims 1 to 4, wherein the diffusing film (14, 43) has a thickness of 2 to 20 µm.

6. A coating liquid for a diffusing film of a high-pressure discharge lamp, comprising:
first silica particles made of shell fragments produced by fracturing hollow silica particles and hollow second silica particles as major components, wherein a weight ratio of the second silica particles and the first silica particles is in a range of 1/5 to 10/1, and
a silicate polymer as a binder.

7. The liquid according to claim 6, wherein the second silica particles are in a spherical shape having an average particle size of 2 to 10 µm.

## Patentansprüche

1. Hochdruckentladungslampe mit
einer Leuchtröhre (2, 32),
einem äußeren Kolben (4, 40), in dem die Leuchtröhre (2, 32) untergebracht ist, und
einer Diffusionsbeschichtung (14, 43) auf der inneren und/oder äußeren Oberfläche des äußeren Kolbens (4, 40),
**dadurch gekennzeichnet, dass**
die Diffusionsbeschichtung (14, 43) erste Silicateilchen, die aus Schalenfragmenten bestehen, die durch Brechen von hohlen Silicateilchen erzeugt wurden, und hohle zweite Silicateilchen aufweist, wobei ein Gewichtsverhältnis der zweiten Silicateilchen und der ersten Silicateilchen in einem Bereich von 1/5 bis 10/1 liegt.

2. Hochdruckentladungslampe nach Anspruch 1, ferner mit
einem inneren Kolben (33), der zwischen der Leuchtröhre (32) und dem äußeren Kolben (40) angeordnet ist, um die Leuchtröhre (32) einzuschließen, wobei der innere Kolben (33) vakuumdicht ist.

3. Hochdruckentladungslampe nach Anspruch 1 oder 2, wobei die zweiten Silicateilchen eine sphärische Form mit einer Durchschnittsteilchengröße von 2 bis 10 µm haben.

4. Hochdruckentladungslampe nach einem der Ansprüche 1 bis 3, wobei die Diffusionsbeschichtung (14, 43) eine lineare Transmission von 5 bis 50% in einem Wellenlängenbereich von 300 bis 800 nm und eine lineare Transmission von 30% oder weniger bei einer Wellenlänge von 550 nm aufweist und eine totale Lichttransmission von 90% oder mehr aufweist.

5. Hochdruckentladungslampe nach einem der Ansprüche 1 bis 4, wobei die Diffusionsbeschichtung (14, 43) eine Dicke von 2 bis 20 µm aufweist.

6. Beschichtungsflüssigkeit für eine Diffusionsbeschichtung einer Hochdruckentladungslampe mit
ersten Silicateilchen aus Schalenfragmenten, die durch Brechen von hohlen Silicateilchen hergestellt wurden, und hohlen zweiten Silicateilchen als Hauptbestandteile, wobei ein Gewichtsverhältnis der zweiten Silicateilchen und der ersten Silicateilchen in einem Bereich von 1/5 bis 10/1 liegt, und
einem Silicatpolymer als Bindungsmittel.

7. Flüssigkeit nach Anspruch 6, wobei die zweiten Silicateilchen eine sphärische Form mit einer Durchschnittsteilchengröße von 2 bis 10 µm aufweisen.

## Revendications

1. Lampe à décharge haute pression comprenant:
un tube lumineux (2, 32);
une ampoule externe (4, 40) logeant le tube lumineux (2, 32); et
un film diffusant (14, 43) formé sur au moins l'une des surfaces interne et externe de l'ampoule externe (4, 40),
**caractérisée en ce que**
le film diffusant (14, 43) comprend des premières particules de silice constituées de fragments d'enveloppe produits en fracturant des particules de silice creuses et des deuxièmes particules de silice creuses, dans laquelle un rapport en poids des deuxièmes particules de silice et des premières particules de silice est dans une plage de 1/5 à 10/1.

2. Lampe à décharge haute pression selon la revendication 1, comprenant en outre:
une ampoule interne (33) disposée entre le tube lumineux (32) et l'ampoule externe (40) pour enfermer le tube lumineux (32), l'ampoule interne (33) étant scellée hermétiquement.

3. Lampe à décharge haute pression selon la revendication 1 ou 2, dans laquelle les deuxièmes particules de silice ont une forme sphérique ayant une taille de particule moyenne de 2 à 10 µm.

4. Lampe à décharge haute pression selon l'une quelconque des revendications 1 à 3, dans laquelle le film diffusant (14, 43) a une transmittance linéaire de 5 à 50 % dans une plage de longueur d'onde de 300 à 800 nm et une transmittance linéaire de 30 % ou moins à une longueur d'onde de 550 nm et a une transmittance totale de 90 % ou plus.

5. Lampe à décharge haute pression selon l'une quelconque des revendications 1 à 4, dans laquelle le film diffusant (14, 43) a une épaisseur de 2 à 20 µm.

6. Liquide de revêtement pour un film diffusant d'une lampe à décharge haute pression, comprenant :
des premières particules de silice constituées de fragments d'enveloppe produits en fracturant des particules de silice creuses et des deuxièmes particules de silice creuses en tant que composants principaux, dans lequel un rapport en poids des deuxièmes particules de silice et des premières particules de silice est dans une plage de 1/5 à 10/1, et
un polymère de silicate en tant que liant.

7. Liquide selon la revendication 6, dans lequel les deuxièmes particules de silice ont une forme sphérique ayant une taille de particule moyenne de 2 à 10 µm.
